# EUROPÄISCHE PATENTSCHRIFT

(11) **EP 2 569 734 B1**
(45) Veröffentlichungstag und Bekanntmachung des Hinweises auf die Patenterteilung: **29.06.2022**
(21) Anmeldenummer: 11718108.1
(22) Anmeldetag: 09.05.2011
(51) Int. Cl.: G06K 19/07, G07D 7/00

(54) **SICHERHEITS- ODER WERTDOKUMENT, VERFAHREN ZU DESSEN HERSTELLUNG UND ZU DESSEN VERIFIKATION**
SECURITY OR VALUE DOCUMENT, METHOD FOR THE PRODUCTION THEREOF AND FOR THE VERIFICATION THEREOF
DOCUMENT DE SÉCURITÉ OU DOCUMENT DE VALEUR, SON PROCÉDÉ DE PRODUCTION ET SON PROCÉDÉ DE VÉRIFICATION

(30) Priorität: 11.05.2010 DE 102010020460
(43) Veröffentlichungstag der Anmeldung: 20.03.2013
(73) Patentinhaber: Bundesdruckerei GmbH, 10969 Berlin (DE)
(72) Erfinder: KULIKOVSKA, Olga, 14165 Berlin (DE); FISCHER, Joerg, 13053 Berlin (DE); PAESCHKE, Manfred, 16348 Wandlitz (DE); FUMY, Walter, 81739 München (DE); TIETKE, Markus, 10365 Berlin (DE); FIEDLER, Robert, 15366 Hoppegarten GT Waldesruh (DE)
(74) Vertreter: Patentanwälte Bressel und Partner mbB
(86) Internationale Anmeldenummer: PCT/EP2011/057418
(87) Internationale Veröffentlichungsnummer: WO 2011/141422

(56) Entgegenhaltungen:
- DE-A1-102006 009 128
- DE-A1-102007 000 874
- DE-A1-102007 000 881
- DE-A1-102008 041 306
- US-A1- 2003 204 743

## Beschreibung

Die Erfindung betrifft ein Sicherheits- oder Wertdokument, ein Verfahren zu dessen Herstellung sowie ein Verifikationsverfahren für dieses Dokument.

Elektronische Sicherheitsdokumente wie der elektronische Reisepass auf Basis der ICAO 9303 MRTD (Machine Readable Travel Document) bzw. der ISO 14443 bei 13,56 MHz bzw. der sogenannte e-Cards, also kartenförmige Sicherheitsdokumente auf Basis der ISO 14443, werden mit einem integrierten elektronischen Schaltkreis (IC), allgemein als RFID-IC oder RFID-Chip bezeichnet, zusammen mit einer Antennenspule versehen. Derartige RFID-ICs werden von den bekannten IC-Herstellern hergestellt und weltweit in derartigen Sicherheitsdokumenten eingesetzt. In Verbindung mit einer geeigneten Antenne sind eine kontaktlose Datenübertragung sowie Energieversorgung mit einer Sende-Empfangseinheit (Lesergerät bzw. Reader) möglich.

Die in den Sicherheitsdokumenten verwendeten RFID-ICs weisen kryptographische Einrichtungen auf, wie das Basic Access Control (BAC)-Verfahren oder das EAC (Extended Access Control)-Verfahren sowie weitere Einrichtungen. Auf diese Art und Weise können trotz weltweit weitgehend einheitlicher ICs pro Land Sicherheitseinrichtungen genützt werden, die sicherheitstechnisch geschlossene Lösungen bezüglich der Personalisierungsdaten pro Land ermöglichen, jedoch weltweit kontaktlos gelesen werden können.

Ein Dokument und ein Lesegerät für ein Dokument, ein Verfahren zur Zugriffskontrolle und ein Computerprogrammprodukt sind beispielsweise aus WO 2008/101899 A1 bekannt. Das Dokument weist einen integrierten elektronischen Schaltkreis zur Speicherung von schutzbedürftigen Daten mit zumindest einer Funkschnittstelle zum Auslesen der schutzbedürftigen Daten auf, wobei der elektronische Schaltkreis zur Ausführung eines kryptographischen Protokolls ausgebildet ist, sodass das Auslesen der Daten nur nach erfolgreicher Durchführung des kryptographischen Protokolls freigegeben wird. Das Dokument weist hierzu eine über Funk auslesbare Informationsquelle mit ersten Daten und eine mit MRZ bezeichnete optisch auslesbare Zone mit zweiten Daten auf, wobei das kryptographische Protokoll so ausgebildet ist, dass die Generierung des kryptographischen Schlüssels für die Ausführung des kryptographischen Protokolls und die Freigabe des Auslesens der schutzbedürftigen Daten das vorherige Auslesen der ersten und zweiten Daten voraussetzt, denn nur wenn der generierte Schlüssel mit einem im Speicher des RFID-ICs abgelegten elektronischen Schlüssel übereinstimmt, wird dem Lesegerät der Zugriff auf die schutzbedürftigen elektronischen Daten gewährt. Bei dem EAC-Verfahren erfolgt eine gegenseitige Authentifizierung des Lesegerätes und des RFID-ICs des Sicherheitsdokuments unter Verwendung eines asymmetrischen Kryptographieverfahrens mit der Notwendigkeit der Verwaltung der entsprechenden Schlüssel. Demgemäß werden ein elektronischer RFID-Lesevorgang und ein optischer Lesevorgang zur kryptographischen Schlüsselgenerierung verwendet.

Ein optischer Lesevorgang wird auch in EP 0 533 829 B1, EP 1 050 026 B1, EP 1 433 305 B1 und WO 1998/057299 A1 genannt. Dabei wird eine Vielzahl von Merkmalen, beispielsweise von Fasern, wie beim Unicate 3DAS-System mit 2,7 x 2,7 x 0,27 mm mit Filaments von etwa < 50 µm Durchmesser, die auf einem kleinen Volumen angeordnet sind, dreidimensional oder zweidimensional optisch gelesen. Auf diese Art und Weise wird ein Public-Key mit 1 aus 60 Milliarden ermittelt (siehe www.orbidcorp.com ORBID 2DMI Mark).

Grundsätzlich können statt Fasern oder Filaments nahezu alle optisch verifizierbaren Materialeigenschaften im Auflicht oder Durchlicht, mit Licht spezieller Wellenlänge oder Kohärenz verwendet werden. Alternativ können beispielsweise auch gedruckte Merkmale dafür herangezogen werden. Beispielsweise kann auch ein Teil der Dokumentenoberfläche oder die gesamte Dokumentenoberfläche, insbesondere mit den dokumentenspezifischen Personalisierungsdaten, wie beispielsweise in WO 2008/101899 A1 angegeben, und ganz besonders inklusive das Gesichtsbild als einmaliges Dokumentenmerkmal, verwendet werden. Der Vorteil bei Verwendung eines derart optisch lesbaren öffentlichen Schlüssels in Verbindung mit einem RFID-IC liegt darin, dass dieses optische Sicherheitsmerkmal mit dem Sicherheitsdokument gut verbunden oder in dieses gut integriert und unabhängig vom RFID-IC ist und derart eine hohe Sicherheit bietet. Der Nachteil eines derartigen optischen Merkmals ist, dass ein entsprechender optischer Leser in das Lesegerät integriert werden muss und dass die Dokumentenoberfläche für einen korrekten Lesevorgang keine Beschädigungen aufweisen darf, was bei feinsten Strukturen bzw. bei 3-D Strukturen sehr kritisch ist. Zusätzlich muss das Lesefeld wiederkehrend genau gelesen werden, um einen immer gleichen Public-Key generieren zu können. Der öffentliche Schlüssel ist in derartigen Systemen zwar im Dokument vorhanden, kann jedoch ohne das darauf abgestimmte optisch-elektronische Lesegerät nicht ausgelesen werden. Derartige optisch-elektronisch generierte Schlüssel sind pro Dokument einzigartig und zufällig und können im Sinne einer ,Physical Uncloneable Function' (PUF) verwendet werden. Der Nachteil eines derartigen Systems liegt beim notwendigen optisch-elektronischen Lesegerät mit all den weiter oben genannten Unzulänglichkeiten.

In WO 2006/061780 A1 wird ein Datenträger mit einem Chip genannt, der Energie und Information für eine kontaktgebundene oder kontaktlose induktive Kommunikation speichert und wobei der Datenträger mehrere anregbare und in den Chip integrierte Chip-Sensoren aufweist, welche nach Anregung ein Signal an die CPU des Chips leiten, wo das Signal verarbeitet wird, wobei die Anregung unabhängig von der Speicherung der Energie und der Information im Chip durch den Chip speziell einstellbar ist, um zusätzlich Information speichern zu können, und die Anregung an die Bedürfnisse der Prozessierung des Signals in der CPU angepasst werden kann.

Bei Hochsicherheits-RFID Lösungen werden Chip-ID-Nummern üblicherweise nur zum Teil oder gar nicht durch maskendefinierte ROMs realisiert, sondern elektrisch in EEPROMs bzw. in PROMs elektronisch nach dem Herstellprozess programmiert, und üblicherweise wird dann nur das Lesen erlaubt und ein Löschen oder Wiederbeschreibvorgang physikalisch verhindert.

In diversen Veröffentlichungen des Massachusetts Institute of Technology (MIT), von Pufco Inc. und Verayo Inc. (Srini Devadas, Ravikanth Pappu 2001 Optical PUFs PhD-Thesis, Blaise Gassend, 2002, IC-PUFs, Delay-PUFs), ferner in diversen Veröffentlichungen von Philips bzw. Intrinsic-ID bzw. NXP (bzw. Pim Tuyls, Boris Skoric, Van Rijnswou Sander M., Bruekers Alphons, Ophey Willem, et al.) sowie in Veröffentlichungen von Infineon und Giesecke & Devrient und GAO wird auf den RFID-ICs eine Art Hardware-intrinsische Sicherheitseinrichtung vorgesehen.

DE 10 2006 009 128 A1 gibt ein Wert- oder Sicherheitsdokument an, in dem sich eine optische-Maske, die für Strahlung einer bestimmten Frequenz transparente und nicht transparente Bereiche aufweist, beispielsweise in Form eines Passphotos, sowie hinter der optischen Maske eine strahlungssensitive Matrix zur Erfassung einer optischen Information, beispielsweise ein CCD (charge coupled device), befinden. Außerdem befindet sich in dem Dokument ein Prozessor zur Ausführung von Programminstruktionen sowie einen elektronischen Speicher zur Speicherung der mit Hilfe der strahlungssensitiven Matrix erfassten optischen Information. Darüber hinaus kann auch eine RFID-Schnittstelle vorgesehen sein. Zur Verwendung des Dokuments wird von außen Licht durch die optische Maske geleitet. Die daraufhin erfasste optische Information wird dann mit einer Referenzinformation verglichen, um eine Freigabe einer Funktionalität des Dokuments zu ermöglichen oder alternativ zu verhindern.

DE 10 2008 041 306 A1 gibt ein Dokument und ein Verfahren zu dessen Selbstverifikation an. Das Dokument enthält eine integrierte Schaltung, die beispielsweise ein RFID-Chip sein kann. Dieser Chip kann eine Strahlungsquelle und einen Strahlungssensor aufweisen. Ferner ist oberhalb der integrierten Schaltung in dem Dokument eine Konversionsschicht, die beispielsweise zum Up- oder Down-Conversion von einfallender Strahlung ausgebildet ist, enthalten. Wenn die Strahlungsquelle Strahlung in einem ersten Frequenzbereich erzeugt, fällt diese auf die Konversionsschicht, wird dort in einen zweiten Frequenzbereich konvertiert und fällt dann auf den Strahlungssensor. Dort ruft diese Strahlung ein Empfangssignal hervor, das von der integrierten Strahlung ausgewertet wird. Zur Selbstverifikation kann beispielsweise geprüft werden, ob die Energie des Empfangssignals innerhalb eines vorgegebenen Sollbereichs liegt.

In US 2003/0204743 A1 wird u.a. angegeben, dass die dort beschriebene Anordnung ein Array an Licht emittierenden Komponenten, ein Array an Licht detektierenden Komponenten und ein Licht-Transmissionsmedium enthält, das ein Speckle-Muster erzeugt, welches von dem Array an Licht detektierenden Komponenten detektiert werden kann, wenn ein oder mehrere Licht emittierende Komponenten Licht emittieren. Es wird angegeben, dass eine PUF-Anordnung einen IC, ein LED-Array und ein CCD-Array auf einem Substrat aufweist. Ein Epoxid umschließt das LED-Array und das CCD-Array. Das Epoxid ist mit einer Licht reflektierenden Schicht beschichtet, sodass Licht, das vom LED-Array emittiert wird, von der reflektierenden Schicht reflektiert und durch das CCD-Array detektiert wird. Wenn verschiedene LED-Kombinationen im LED-Array leuchten, wird das CCD-Array verschiedene Speckle-Muster detektieren. Nur wenige LEDs werden zur Erzeugung eines Speckle-Musters gleichzeitig eingeschaltet.

DE 10 2007 000 874 A1 beschreibt ein Dokument mit einer integrierten Anzeigevorrichtung, einem elektronischen Speicher zur Speicherung erster und zweiter Daten und mit Steuerungsmitteln zur Ansteuerung der Anzeigevorrichtung für eine Wiedergabe der ersten Daten, wobei die Steuerungsmittel zur Ansteuerung der Anzeigevorrichtung für eine Modulation zum Senden der zweiten Daten ausgebildet sind.

### Aufgabe der Erfindung:

Der vorliegenden Erfindung liegt die Aufgabe zugrunde, ein Sicherheits- oder Wertdokument mit mindestens einem darin eingebetteten integrierten elektronischen Schaltkreis zu schaffen, auf dem beispielsweise personalisierte, insbesondere schutzbedürftige, Daten gespeichert sind, sodass gewährleistet sein muss, dass der Schaltkreis nicht unbefugt manipuliert, beispielsweise geändert oder ausgetauscht werden kann. Daher ist es erforderlich, dass erkennbar sein soll, ob der Schaltkreis oder das Sicherheits- oder Wertdokument selbst manipuliert worden ist. Die schutzbedürftigen Daten können Werte darstellen oder insbesondere Personalisierungsdaten inklusive biometrische Daten sein.

### Beschreibung der Erfindung:

Um diese Aufgaben zu lösen, werden erfindungsgemäß ein Sicherheits- oder Wertdokument gemäß Anspruch 1, ein Verfahren zur Herstellung des Sicherheits- oder Wertdokuments gemäß Anspruch 10 und ein Verfahren zur Verifikation des Sicherheits- oder Wertdokuments gemäß Anspruch 11 geschaffen. Bevorzugte Ausführungsformen sind in den Unteransprüchen angegeben.

Erfindungsgemäß wird vorgeschlagen, dass eine Verifikation im Dokument selbst durchgeführt wird und nicht extern über ein Lesegerät und dass eine zusätzliche, einzigartige, nicht kopierbare, zufällige Information für die Ausführung des kryptographischen Protokolls gegeben ist bzw. gelesen und verifiziert werden muss, damit schutzbedürftige Daten aus dem integrierten elektronischen Schaltkreis ausgelesen werden können. Hierzu werden auf dem integrierten elektronischen Schaltkreis Sensorelemente angeordnet.

Zur Ausführung derartiger Protokolle und der hierfür erforderlichen Ausbildung eines integrierten elektronischen Schaltkreises wird beispielhaft auf EP 0 313 967 A1 verwiesen.

Somit enthält das Sicherheits- oder Wertdokument mindestens einen zu einem Dokumentenelement des Sicherheits- oder Wertdokuments benachbarten ungehausten integrierten elektronischen Schaltkreis zur Speicherung von schutzbedürftigen Daten, mit zumindest einer Kommunikationsschnittstelle (kontaktlos oder drahtgebunden), wobei das Sicherheits- oder Wertdokument zusätzlich mindestens ein Sensorelement zum Empfang eines Verifikationssignals aufweist und wobei das Verifikationssignal durch physikalische Eigenschaften des zum integrierten elektronischen Schaltkreis benachbarten Dokumentenelements beeinflusst wird. Das mindestens eine Sensorelement ist ferner ein auf elektromagnetische Strahlung ansprechendes Sensorelement, und das Verifikationssignal wird durch elektromagnetische Strahlung gebildet. In dem Dokument ist zusätzlich mindestens eine Anreungsquelle zur Erzeugung von elektromagnetischer Strahlung vorhanden. Mindestens eine Anregungsquelle erzeugt elektromagnetische Strahlung mit einer vorgegebenen Pulsfolge. Das Dokumentenelement kann insbesondere durch ein Einbettungsmaterial für den elektronischen Schaltkreis gebildet sein, in das der ungehauste integrierte elektronische Schaltkreis eingebettet ist. Das Dokumentenelement ist ein Bestandteil des Sicherheits- oder Wertdokuments und steht mit dem elektronischen Schaltkreis vorzugsweise in Kontakt.

Bei den Materialien des zum elektronischen Schaltkreis benachbarten Dokumentenmaterials, insbesondere den Einbettungsmaterialien, handelt es sich vorzugsweise um papierbasierte und/oder kunststoffbasierte Materialien, z. B. Kunststoffpolymere wie PC, PVC, PA oder Mischungen daraus, welche vorzugsweise als Schichten ausgebildet, übereinandergelegt und mit einander verbunden sind. Besonders bevorzugt werden Kunststofffolien bzw. Kunststoffschichten verwendet, welche gleiche oder ähnliche Eigenschaften aufweisen und nach dem Verbinden zum Beispiel durch Verkleben oder Laminieren nicht mehr oder nur schwer zu trennen sind. Besonders bevorzugt bilden die Schichten nach dem Laminieren einen monolithischen Block.

Erfindungsgemäß können die Sensorelemente auf dem oder außerhalb des integrierten elektronischen Schaltkreises angeordnet sein. Die Sensorelemente befinden sich im Sicherheits- oder Wertdokument.

Wird der integrierte elektronische Schaltkreis unbefugt manipuliert, etwa indem das Dokument zur Entnahme des Schaltkreises delaminiert wird, kann eine derartige Manipulation daher dadurch erkannt werden, dass sich die für die Erzeugung des Verifikationssignals dienenden physikalischen Eigenschaften verändern, denn bei erneuter Assemblierung des Dokuments nach dem Delaminieren können die einzelnen Lagen nicht mehr derart präzise zusammengefügt werden, dass gewährleistet werden kann, dass die physikalischen Eigenschaften wie im ursprünglichen Zustand reproduziert werden.

Das erfindungsgemäße Sicherheits- oder Wertdokument ist daher derart ausgebildet, dass über das Verifikationssignal bzw. dessen Wert in dem integrierten elektronischen Schaltkreis gegen ein Referenz-Verifikationssignal bzw. einen Referenz-Wert eine Manipulation verifizierbar ist, nämlich ob der integrierte elektronische Schaltkreis oder seine Umgebung nach der Einbettung des Schaltkreises in das Sicherheits- oder Wertdokument manipuliert worden ist. Das Referenz-Verifikationssignal wird dabei auf die gleiche Art wie das Verifikationssignal erzeugt und kann selbst oder als transformierter Wert, z.B. HASH-Wert, auf dem Schaltkreis abgelegt sein. In einer anderen nicht beanspruchten Ausführungsform kann das Verifikationssignal bzw. dessen Wert außerhalb des integrierten elektronischen Schaltkreises, z.B. in einer Datenbank verglichen bzw. ausgewertet werden.

Somit detektiert jedes einzelne Sensorelement durch Interaktion eines Abfrage-Signals, erzeugt durch eine im Dokument enthaltene Anregungsquelle, mit dem zum elektronischen Schaltkreis benachbarten Dokumentenelement des Dokuments, insbesondere mit dem Einbettungsmaterial zum Einbetten des elektronischen Schaltkreises, entsprechend einzigartige, nicht kopierbare Antwort-Signale. Dadurch generieren die Sensorelemente eine vom Dokumentenelement herstellbedingte zufällige Information. Die physikalischen Eigenschaften des Dokumentenelements, insbesondere des Einbettungsmaterials, können durch eine zufällige Verteilung von in mindestens einem Schichtelement enthaltenen Inhomogenitäten, erzeugt z.B. durch Partikel, Pigmente, Strukturen oder Einschlüsse in fester, gasförmiger oder fester Form mit farbigen, transparenten, reflektierenden, absorbierenden, streuenden, diffraktiven, elektrisch oder thermisch leitfähigen, dielektrischen, magnetischen, radioaktiven, lumineszierenden, fluoreszierenden, upkonvertierenden, elektrochromen, thermochromen, photochromen, elastomeren, piezoelektrischen, chemisch reaktiven Materialien, definiert werden. Die Partikel können beispielsweise nach entsprechender Anregung elektromagnetische Strahlung aussendende Partikel sein, zum Beispiel lumineszierende Teilchen, etwa Nanopartikel mit einer bestimmten Emissionswellenlänge, oder auch elektrische leitfähige Partikel, wie Metallpartikel, etwa Silber- oder Kupferflakes oder -nadeln.

Vorzugsweise setzt die Freigabe des Auslesens der schutzbedürftigen Daten das Auslesen dieser Information voraus. Die herstellbedingten zufälligen Informationen, die von den Sensorelementen detektiert werden, gehen bei einer Manipulation des Dokuments verloren bzw. können nicht mehr korrekt ausgelesen werden, sodass keine Freigabe des Auslesens der schutzbedürftigen Daten erfolgt.

Als Verifikationssignal dient elektromagnetische Strahlung. In entsprechender Weise müssen die hierfür geeigneten Sensorelemente ausgebildet sein. Für die Detektion von elektromagnetischer Strahlung werden beispielsweise Photozellen verwendet.

Das erfindungsgemäße Sicherheits- oder Wertdokument ist vorzugsweise als RFID-Dokument ausgebildet, d.h. es weist zusätzlich zu dem integrierten elektronischen Schaltkreis auch eine Antenne auf, die mit dem Schaltkreis verbunden ist und über die Daten über eine Funkschnittstelle und damit nicht drahtgebunden mit einem externen Lesegerät ausgetauscht werden können, sodass Daten, beispielsweise schutzbedürftige Daten, über eine Funkschnittstelle ausgelesen werden können. Derartige RFID-Dokumente sind dem Fachmann hinsichtlich ihres Aufbaus und ihrer Herstellung hinlänglich bekannt. Beispielsweise kann es sich bei der Funkschnittstelle um eine drahtlose Kommunikationsschnittstelle gemäß ISO 14443 A/B bzw. gemäß MRTD (Machine Readable Travel Document) ICAO 9303 handeln, wobei die Funkübertragung vorzugsweise bei einer HF-Frequenz von 13,56 MHz erfolgt und der RFID-IC zur Ausführung eines kryptographischen Protokolls entsprechend den diversen Standards ausgebildet ist. Beispielsweise sind in EP 0 706 152 A2 und DE 10 2004 056 829 A1 ein derartiges Dokument und seine Herstellung beschrieben.

Das erfindungsgemäße Dokument kann insbesondere ein papierbasiertes und/oder kunststoffbasiertes Dokument sein, insbesondere ein Wert- oder Sicherheitsdokument, wie zum Beispiel ein Ausweisdokument, insbesondere ein Reisepass, Personalausweis, Visum oder ein Führerschein, Fahrzeugschein, Fahrzeugbrief, Firmenausweis, Gesundheitskarte oder ein anderes ID-Dokument oder eine Chipkarte, Zahlungsmittel, insbesondere eine Banknote, Bankkarte oder Kreditkarte, ein Frachtbrief oder ein sonstiger Berechtigungsnachweis.

In einer bevorzugten Ausführungsform der Erfindung ist mindestens ein Sensorelement Teil des integrierten elektronischen Schaltkreises. Alternativ können eines der Sensorelemente oder auch mehrere oder alle Sensorelemente außerhalb des Schaltkreises angeordnet sein, beispielsweise auf einem separaten Messelement. Das Sensorelement kann beispielsweise auf einem RFID-IC oder auf einem anderen im Dokument integrierten elektronischen Schaltkreis in Form eines einzelnen oder von mehreren sensitiven Elementen (Sensorelemente) angeordnet sein.

Das mindestens eine Sensorelement ist ein auf elektromagnetische Strahlung ansprechendes Sensorelement. Das Verifikationssignal wird durch elektromagnetische Strahlung gebildet. Vorzugsweise ist die elektromagnetische Strahlung Licht im UV-, sichtbaren und/oder IR-Bereich.

Weiter bevorzugt ist mindestens ein Sensorelement ein auf CMOS-Technologie beruhendes Sensorelement.

Die CMOS-Elemente haben bestimmte Vorteile gegenüber beispielsweise CCD-Elementen:
CMOS-Elementen weisen verglichen mit CCD-Elementen einen geringeren Stromverbrauch auf. CCD-Elemente benötigen aufgrund der Technologie einen eigenen IC. Dagegen kann bei CMOS alles auf einem IC angeordnet werden. CMOS-Elemente erlauben eine höhere Bildrate und können selektiv ausgelesen werden. CMOS-Elemente haben darüber hinaus einen geringeren Füllfaktor: z.B. 6,5x6,5 µm Fill-factor: 30% (oder: 10,6x10,6 µm-usw.). Außerdem haben CMOS-Elemente größere Empfindlichkeitsunterschiede zwischen den Pixeln (Uniformität).

Unter Sensorelementen wird, da das Sensorelement ein auf elektromagnetische Strahlung ansprechendes Sensorelement ist, vorzugsweise eine Mehrzahl optisch sensitiver Elemente verstanden. Da integrierte elektronische Schaltkreise überwiegend auf Basis einkristalliner Silizium-Substrate hergestellt werden und üblicherweise eine CMOS-Technologie zur Anwendung gelangt, werden derartige Sensorelemente eine Sensitivität im Wellenlängenbereich von 300 nm bis 1.100 nm aufweisen, wenn die Sensorelemente auf dem Schaltkreis erzeugt werden. Wie angegeben, können die Sensorelemente jedoch auch separat von dem integrierten elektronischen Schaltkreis angeordnet sein.

Die Sensorelemente sind im integrierten elektronischen Schaltkreis, insbesondere RFID-IC, vorzugsweise in der Form von auf der IC-Oberfläche verteilten Sensorelementen beziehungsweise linien- oder matrix-förmig ausgebildet.

Gemäß der Erfindung ist zusätzlich mindestens ein Abfrageelement zur Erzeugung eines Signals, das nach Beeinflussung durch das Dokumentenelement, insbesondere Einbettungsmaterial, das Verifikationssignal ergibt, vorgesehen. Das Abfrageelement ist eine Anregungsquelle zur Erzeugung von elektromagnetischer Strahlung.

Die Anregungsquelle kann auf dem integrierten elektronischen Schaltkreis oder auch außerhalb des Bereiches, beispielsweise neben dem Schaltkreis, angeordnet sein. Beispielsweise kann dieses Abfrageelement, nämlich die Anregungsquelle, auf dem integrierten elektronischen Schaltkreis, beispielsweise dem RFID-IC, selbst angeordnet sein, oder es kann ein im Dokument angeordnetes oder auf dem RFID-IC angeordnetes physikalisches Abfrage-Element die physikalische Messung auslösen.

Da sich die Abfragequelle innerhalb des Dokuments befindet, ist es bevorzugt, wenn der Abstand zwischen dem mindestens einen Abfrageelement und dem mindestens einen Sensorelement so gering wie möglich ist.

Das Abfrage-Element ist ein Licht emittierendes Element, und das Sensor-Element ist ein Licht empfindliches Element.

Besonders bevorzugt umfasst der integrierte elektronische Schaltkreis, insbesondere der RFID-IC, zumindest ein Licht emittierendes Element mit einer Emissionswellenlänge im Bereich von etwa 300 nm bis 1.100 nm. Dieses zumindest eine Licht emittierende Element ist besonders bevorzugt direkt auf dem integrierten elektronischen Schaltkreis in Form einer LED angeordnet und mittels Drahtbond-Anschlüssen oder mittels Lötkontakten oder mittels elektrisch leitfähigen isotropem oder anisotropem Kontaktkleber kontaktiert.

Das Licht emittierende Element ist vorzugsweise in Form einer OLED auf dem integrierten elektronischen Schaltkreis angeordnet und insbesondere drucktechnisch hergestellt.

In einer alternativen bevorzugten Ausführungsform der Erfindung ist das Abfrage-Element ein Licht emittierendes Element in Form einer LED oder einer OLED, die seitlich (beabstandet) zum Schaltkreis angeordnet ist und die analog zu den Antennenspulenanschlüssen eines RFID-IC elektrisch leitend kontaktiert ist.

Erfindungsgemäß ist das Licht emittierende Element (Strahlungsquelle) in Form von Lumineszenz- bzw. Phosphoreszenz-Stoffen/Partikeln im Dokument integriert, wobei die Anregung mittels integrierter, gegebenenfalls zusätzlich auch alternativ äußerer, Lichtquelle erfolgt. Die lumineszierenden, d.h. fluoreszierenden oder phosphoreszierenden, Materialien können daher Stoffe sein, die im Dokumentmaterial gelöst oder in Form von Partikeln vorliegen. Somit wird in dieser speziellen Ausführungsform der Erfindung mindestens eine der Strahlungsquellen durch sich im zum elektronischen Schaltkreis benachbarten Dokumentenelement, insbesondere im Einbettungsmaterial, befindende lumineszierende Stoffe gebildet, die durch mindestens eine zusätzliche Anregungsquelle innerhalb oder außerhalb des Sicherheits- oder Wertdokuments anregbar sind. Als Anregungsquelle kommen für im Dokument selbst angeordnete Quellen Elemente wie LED und OLED in Frage. Für außerhalb des Dokuments angeordnete Quellen kann jede beliebige Lichtquelle, also beispielsweise LED, OLED, Entladungslampen, Glühfadenlampen, Laserquellen, verwendet werden.

Durch die Integration von Licht emittierenden Elementen in Form von LEDs oder OLEDs auf oder neben dem RFID-IC können diese Elemente im Dokument, wenn das Dokument in einen entsprechenden Leseabstand zu einem RFID-Lesegerät gebracht wird, Licht emittieren, welches in den Sensorelementen entsprechende Signale bewirkt.

Erfindungsgemäß erzeugt mindestens eine Anreungungsquelle elektromagnetische Strahlung mit einer vorgegebenen Pulsfolge.

Das zumindest eine Licht emittierende Element sendet vorzugsweise Licht mit einer entsprechenden Frequenz bzw. mit einer Pulsfolge mit unterschiedlichen Impulslängen bzw. Impulsabständen aus, bzw. es sendet modulierte Lichtimpulse aus.

Des Weiteren enthält das Sicherheits- oder Wertdokument mindestens ein Schichtelement, das die elektromagnetische Strahlung auf einem Strahlungsweg zu mindestens einem Sensorelement zumindest teilweise durchquert und in dem die elektromagnetische Strahlung zeitlich moduliert wird.

Dieses Schichtelement kann einzelne strukturierte miteinander nicht korrelierende Schichten enthalten, welche die elektromagnetische Strahlung auf dem Strahlungsweg zum Sensor durchquert und/oder die elektromagnetische Strahlung unkontrollierbar und unvorhersagbar beeinflusst.

Weiterhin kann beispielsweise über mehreren optisch sensitiven Elementen des Schaltkreises eine Schicht oder eine Schichtfolge (Schichtelement) angeordnet sein, und diese Schichtfolge kann mit dem thermoplastischen Material des Dokumentenkörpers und der Oberfläche des Schaltkreises derart verbunden sein, dass eine Trennung die Zerstörung des Zusammenwirkens der intrinsischen Eigenschaften des Schichtelementes mit den Sensorelementen zur Folge haben würde.

Weiterhin kann das Schichtelement durchscheinend oder auch transluzent ausgebildet sein und intrinsisch herstellbedingt zufällig verteilte Strukturen aufweisen. Auf diese Art und Weise kann das Licht des zumindest einen Licht emittierenden Elementes (der Strahlungsquelle) durch Streuung oder Absorption oder Reflektion nur zu einem Teil der Sensorelemente gelangen und solcherart eine herstellbedingte zufällige Information generieren.

Beispielsweise kann über mehreren sensitiven Elementen eine für jedes Dokument herstellbedingt intrinsisch zufällige Schicht bzw. herstellbedingt eine unkorrelierte Schichtfolge strukturierter Schichten (Schichtelement) angeordnet sein.

Beispielsweise können die physikalischen Eigenschaften des zum elektronischen Schaltkreis benachbarten Dokumentenelements, insbesondere des Einbettungsmaterials, durch eine zufällige Verteilung von in mindestens einem Schichtelement enthaltenen Partikeln definiert sein.

Ferner kann das Schichtelement in einer nicht beanspruchten Variante aus anisotrop elektrisch leitfähigem Kontaktkleber bestehen und die elektrisch leitfähigen Partikel homogen und willkürlich intrinsisch in dem Schichtelement
verteilt sein und auf diese Weise eine intrinsisch zufällige und nicht kopierbare permanente Information beim Auslesen der Sensorelemente bewirken.

Erfindungsgemäß besteht das Schichtelement aus einer polymeren weitgehend transparenten Matrix oder auch aus einer Haftvermittlerschicht, in die homogen dispergiert Lumineszenz- bzw. Phosphoreszenz-Pigmente eingebaut sind und die auf diese Weise über die Sensorelemente eine herstellbedingte zufällige Information generieren.

Außerdem kann in einer nicht beanspruchten Variante das Schichtelement aus einer Licht leitenden Schicht und einer darüber angeordneten reflektierenden Schicht gebildet sein, und die reflektierende Schicht kann eine herstellbedingte zufällige Struktur aufweisen, sodass über die Sensorelemente eine herstellbedingte zufällige Information generiert wird.

In einer speziellen Ausführungsform der Erfindung ist mindestens ein Schichtelement unmittelbar angrenzend an mindestens eine Anregungsquellen in dem Dokument angeordnet. Auf der der mindestens einen Anregungsquelle abgewandten Seite des mindestens einen Schichtelements befindet sich eine mindestens einen reflektierenden Bereich aufweisende Reflexionsschicht.

Wenn die Licht emittierenden Elemente (Strahlungsquellen) oder das zumindest eine Licht erzeugende Element (Anregungsquelle) mit einer gleichmäßig transparenten thermoplastischen Masse verbunden bzw. gekoppelt sind, werden üblicherweise alle optisch sensitiven Elemente, bezogen auf eine untere beziehungsweise obere Schwellspannung bzw. auf eine dazwischen orientierte Signalspannung, ein vergleichbar großes elektrisches Signal erzeugen.

Erfindungsgemäß wird nunmehr das Schichtelement derart ausgebildet, dass die Sensorelemente beim Lesevorgang eine zufällige Information detektieren, wobei diese Information unabhängig von Temperaturschwankungen und unabhängig von Schwankungen im RFID-Feld immer die gleiche Information pro Dokument aufweisen und diese Information von den physikalischen Eigenschaften des Schichtelementes abhängen und in der Produktion von Dokumenten durch geeignete Wahl der Schwellspannung beziehungsweise Lesespannung eine Gauß-Verteilung beziehungsweise eine Gleichverteilung der Information der Sensorelemente aufweist, also annähernd gleich viele Sensorsignale unterhalb der unteren Lesespannung wie oberhalb der oberen Lesespannung gegeben sind.

Gegenüber der in US 2003/0204743 A1 offenbarten Ausführung werden die Sensorelemente vorzugsweise in Form von CMOS-Elementen gewählt und außerdem vorzugsweise direkt an dem integrierten elektronischen Schaltkreis realisiert. Die in US 2003/0204743 A1 offenbarten CCD-Elemente können technologisch bedingt nicht in einer üblichen RFID-CMOS-Technologie hergestellt werden.

Weiterhin ist es bevorzugt, wenn gemäß der vorliegenden Erfindung kein LED-Array verwendet wird, sondern eine einzelne LED oder eine OLED direkt am integrierten elektronischen Schaltkreis, wobei das OLED-Element durchaus in der Form eines OLED-Arrays ausgebildet sein kann. Grundsätzlich kann aber auch ein LED-Array vorgesehen sein.

Üblicherweise müssen RFID-Systeme passiv, also ohne Batterie betrieben werden, sodass für einen derartigen Fall gemäß der vorliegenden Erfindung keine Batterie vorgesehen sein muss. Vielmehr wird die Stromversorgung durch das 13,56 MHz-Feld des Lesegerätes für die Funkübertragung generiert, sodass der Stromverbrauch extrem gering gehalten werden muss. In einer speziellen Ausführungsform kann ein Kondensator für einzelne Licht emittierende Impulse hilfreich bzw. notwendig sein.

Weiterhin wird der integrierte elektronische Schaltkreis gemäß der vorliegenden Erfindung mit dem zumindest einen Licht emittierenden Element und den Licht detektierenden Elementen in einen Laminataufbau eines Sicherheitsdokumentes integriert, sodass das Schichtelement einen Bestandteil des Laminataufbaus darstellt und von daher Epoxidharz wie in US 2003/0204743 A1 zur Einbettung nicht verwendet werden kann. Denn ein ID-1- oder ein ID-2- oder ein ID-3-Dokument muss eine hohe Biegeflexibilität aufweisen und sehr viele Biege-Wechsel-Last-Zyklen bestehen (vgl. ISO 10373 bei kartenförmigen Sicherheitsdokumenten).

Schließlich muss nicht das Reflektionselement mit Reflektionscharakteristika das Speckle-Pattern wie in US 2003/0204732 A1 erzeugen. Vielmehr muss die Schicht zwischen den CMOS-Elementen und der Reflektionsschicht (ohne Reflektionscharakteristika) eine Ja-Nein-Information auf dem Sensor-Array generieren, also kein Interferenzmuster.

Durch die Kombination eines RFID-ICs mit der elektrisch leitfähig kontaktierten Antennenspule mit den folgenden Elementen:
mehrere optisch sensitive Elemente,
zumindest ein Licht emittierendes Element,
ein Schichtelement mit herstellbedingten physikalischen Eigenschaften und Integration dieser Elemente in einen Dokumentenkörper auf Basis mehrerer miteinander
laminierter Folien beziehungsweise Folien und Schichtfolgen
kann das Risiko einer Dokumentenfälschung reduziert oder verhindert werden.

Der Dokumentenkörper wird derart zum optisch-elektronischen Sicherheitsmerkmal in Kombination mit dem integrierten elektronischen Schaltkreis, bzw. der integrierte elektronische Schaltkreis wird mit physikalischen Merkmalen bzw. Eigenschaften des Dokuments verbunden und kann daher nicht in einem anderen Dokument verwendet werden.

Der integrierte elektronische Schaltkreis, beispielsweise RFID-IC, ist vorzugsweise ein Siliziumsubstrat. Die integrierte Schaltung kann insbesondere in CMOS-Technologie ausgeführt sein, und die Sensorelemente können eine Sensitivität im Wellenlängenbereich von 300 nm bis 1.100 nm aufweisen.

Der integrierte elektronische Schaltkreis des erfindungsgemäßen Sicherheits- oder Wertdokuments ist vorzugsweise zur Ausführung eines kryptographischen Protokolls ausgebildet, und die für die Ausführung des kryptographischen Protokolls notwendigen Werte werden aus dem Referenz-Verifikationssignal abgeleitet.

Besonders bevorzugt ist es, wenn der integrierte elektronische Schaltkreis zur Errechnung eines Schlüssels, basierend auf den Werten aus dem Referenz- Verifikationssignal, ausgebildet ist.

Weiterhin ist es besonders bevorzugt, wenn der integrierte elektronische Schaltkreis zur Errechnung eines HASH-Wertes aus dem Verifikationssignal ausgebildet ist.

Eine sehr vorteilhafte Ausführungsform der Erfindung ergibt sich, wenn der integrierte elektronische Schaltkreis über das kryptographische Protokoll verifiziert, ob das Sicherheits- oder Wertdokument unmanipuliert ist und nur im Falle einer positiven Verifizierung das Auslesen der schutzbedürftigen Daten freigibt. Diese Freigabe kann beispielsweise auch angezeigt werden. Die Anzeige kann sowohl durch das Dokument selbst als auch durch ein Verifikationsgerät erfolgen. Die Anzeige durch das Dokument selbst kann beispielsweise optisch und/oder akustisch erfolgen.

In diesem Falle werden somit die für die Durchführung des kryptographischen Protokolls notwendigen Werte (Zahlenreihen) aus physikalisch gemessenen Werten abgeleitet. Dadurch sind diese physikalisch gemessenen Werte einzigartig für den Verbund (die Verknüpfung) von integriertem elektronischem Schaltkreis mit dem Dokument und identifizieren diese eindeutig als Verbund während des Zusammenbaus von elektronischem Element mit dem Dokument, sodass die physikalisch gemessenen Werte durch das Dokumentmaterial und den Herstellprozess intrinsisch zufällig und unkontrollierbar verteilt sind.

Ferner kann die Freigabe des Auslesens der schutzbedürftigen Daten das Auslesen dieser Information voraussetzen und diese digitale intrinsisch zufällige Information beim Personalisierungsprozess (dem Enrolment = Einlernphase) mit anderen RFID-IC-Daten, wie beispielsweise einem Teil der Seriennummer oder der gesamten Seriennummer oder anderen Personalisierungsdaten, mittels HASH-Wertbildung in Beziehung gebracht und eine Prüfsumme in einem EEPROM-Speicher oder einem PROM-Speicher am RFID-IC oder über die RFID-Schnittstelle über ein RFID-Lesesystem in einem Sicherheitsdatenbanksystem abgespeichert werden, wobei die Freigabe des Auslesens der schutzbedürftigen Daten neben dem Auslesen dieser intrinsischen Information eine Übereinstimmung mit der Prüfsumme ergeben muss.

Erfindungsgemäß ist auch ein Verfahren gemäß Anspruch 10 zur Herstellung des Sicherheits- oder Wertdokuments gemäß der vorliegenden Erfindung, wobei das Sicherheits- oder Wertdokument mindestens einen zu einem Dokumentenelement des Sicherheits- oder Wertdokuments benachbarten, ungehausten integrierten elektronischen Schaltkreis zur Speicherung von schutzbedürftigen Daten über zumindest eine Kommunikationsschnittstelle und zusätzlich mindestens ein Sensorelement zum Empfang eines Verifikationssignals aufweist, wobei das Verifikationssignal durch physikalische Eigenschaften des zum integrierten elektronischen Schaltkreis benachbarten Dokumentenelements beeinflusst wird, wobei ferner mindestens ein Sensorelement ein auf elektromagnetische Strahlung ansprechendes, lichtempfindliches Sensorelement ist und das Verifikationssignal durch elektromagnetische Strahlung gebildet wird, wobei zusätzlich mindestens eine Anregungsquelle zur Erzeugung von elektromagnetischer Strahlung in dem Dokument vorhanden ist und wobei die mindestens eine Anregungsquelle elektromagnetische Strahlung mit einer vorgegebenen Pulsfolge erzeugt, umfassend folgende Verfahrensschritte:
(a) Aufbringen des integrierten elektronischen Schaltkreises auf eine erste Lage eines ersten Dokumentenelements,
(b) Aufbringen einer zweiten Lage eines zweiten Dokumentenmaterials auf die den integrierten elektronischen Schaltkreis aufweisende Seite der ersten Lage und
(c) Laminieren der ersten und der zweiten Lage.

Das Dokumentenelement kann durch ein Einbettungsmaterial für den ungehausten integrierten elektronischen Schaltkreis gebildet sein, in den der elektronische Schaltkreis eingebettet ist.

Das erfindungsgemäße Herstellungsverfahren für ein Dokument beispielsweise mit einem RFID-IC zur Speicherung der schutzbedürftigen Daten insbesondere mit zumindest einer Funkschnittstelle zum Auslesen schutzbedürftiger Daten wird somit mittels Lamination einer Mehrzahl von Folien durchgeführt.

Weiterhin ist erfindungsgemäß auch ein Verfahren gemäß Anspruch 11 zum Verifizieren des Sicherheits- oder Wertdokuments gemäß der vorliegenden Erfindung, wobei das Sicherheits- oder Wertdokument mindestens einen zu einem Dokumentenelement des Sicherheits- oder Wertdokuments benachbarten, ungehausten integrierten elektronischen Schaltkreis zur Speicherung von schutzbedürftigen Daten über zumindest eine Kommunikationsschnittstelle und zusätzlich mindestens ein Sensorelement zum Empfang eines Verifikationssignals aufweist, wobei das Verifikationssignal durch physikalische Eigenschaften des den integrierten elektronischen Schaltkreis umgebenden Dokumentenelements beeinflusst wird, wobei ferner mindestens ein Sensorelement ein auf elektromagnetische Strahlung ansprechendes, lichtempfindliches Sensorelement ist und das Verifikationssignal durch elektromagnetische Strahlung gebildet wird, wobei zusätzlich mindestens eine Anregungsquelle zur Erzeugung von elektromagnetischer Strahlung in dem Dokument vorhanden ist und wobei mindestens eine Anregungsquelle elektromagnetische Strahlung mit einer vorgegebenen Pulsefolge erzeugt, umfassend folgende Verfahrensschritte:
(a) Erzeugen des Verifikationssignals in dem Sicherheits- oder Wertdokument und Empfangen des Verifikationssignals mittels des mindestens einen Sensorelements und
(b) Vergleichen des ermpfangenen Verifikationssignals mit einem in dem integrierten elektronischen Schaltkreis gespeicherten Referenz-Verifikationssignal, das unmittelbar nach einem Einbetten des integrierten elektronischen Schaltkreises in das Sicherheits- oder Wertdokument erhalten worden ist.

Das Dokumentenelement kann durch ein Einbettungsmaterial für den ungehausten integrierten elektronischen Schaltkreis gebildet sein, in den der elektronische Schaltkreis eingebettet ist.

In einer bevorzugten Ausführungsform des Verifikationsverfahrens wird das Referenz-Verifikationssignal zur Generierung eines Schlüssels für die Ausführung eines kryptographischen Protokolls verwendet.

Ferner ist es bevorzugt, wenn das Verifikationssignal und das Referenz-Verifikationssignal unter Verwendung eines kryptographischen Protokolls codiert werden.

In einer weiter bevorzugten Ausführungsform des Verifikationsverfahrens werden das Verifikationssignal und das Referenz-Verifikationssignal unter Bildung von entsprechenden HASH-Werten codiert.

Zur näheren Erläuterung der Erfindung dienen folgende Ausführungsformen:
- Fig. 1: zeigt schematisch ein erfindungsgemäßes Sicherheits- oder Wertdokument in der Draufsicht in einer ersten erfindungsgemäßen Ausführungsform zusammen mit einem RFID-Lesegerät;
- Fig. 2: zeigt schematisch einen vergrößerten Ausschnitt der ersten erfindungsgemäßen Ausführungsform im Bereich eines RFID-IC;
- Fig. 3: zeigt schematisch einen vergrößerten Ausschnitt einer zweiten erfindungsgemäßen Ausführungsform im Bereich eines RFID-IC;
- Fig. 4: zeigt schematisch einen vergrößerten Ausschnitt einer dritten erfindungsgemäßen Ausführungsform;
- Fig. 5: zeigt schematisch einen Querschnitt der Ausführungsform von Fig. 1;
- Fig. 6: zeigt schematisch einen Querschnitt der Ausführungsform von Fig. 2;
- Fig. 7: zeigt schematisch einen Querschnitt der Ausführungsform von Fig. 3;
- Fig. 8: zeigt schematisch einen Querschnitt der Ausführungsform von Fig. 4;
- Fig. 9: zeigt schematisch einen Querschnitt einer fünften nicht erfindungsgemäßen Ausführungsform bei IR-Bestrahlung;
- Fig. 10: zeigt schematisch einen Querschnitt einer sechsten erfindungsgemäßen Ausführungsform;
- Fig. 11: zeigt schematisch einen Querschnitt einer siebten erfindungsgemäßen Ausführungsform.

In den Figuren bezeichnen gleiche Bezugszeichen Elemente mit der gleichen Funktion.

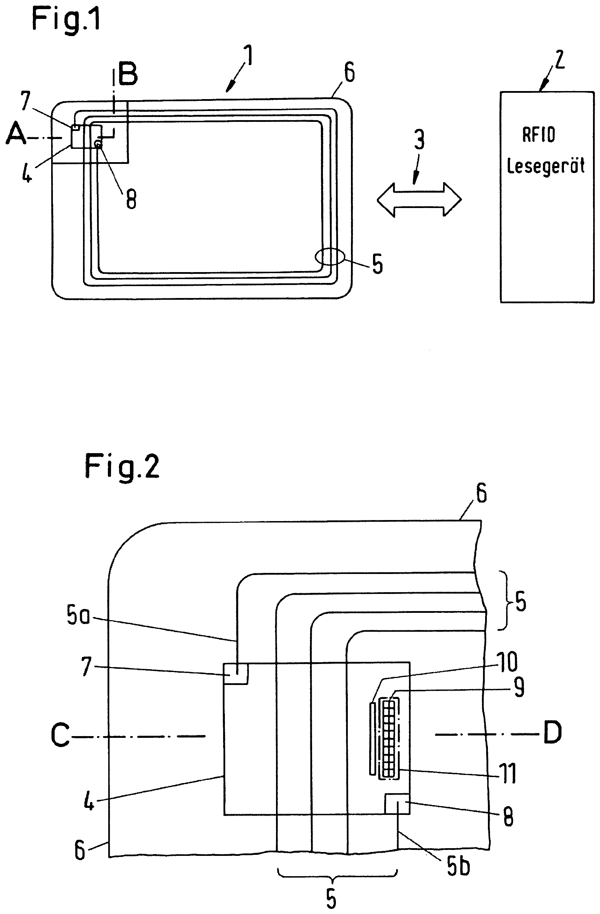

In Fig. 1 ist schematisch ein Dokument 1 mit einem RFID-IC 4 und einer Antennenspule 5 mit einem RFID-Lesegerät 2 und der RFID-Funkschnittstelle 3 in einer ersten erfindungsgemäßen Ausführungsform dargestellt. Erfindungsgemäß wird ein ISO 14443 A/B RFID-System bei 13,56 MHz und einem Leseabstand von einigen wenigen Zentimetern bis zu etwa 1,5 bis 10 Zentimetern genannt. Der RFID-IC 4 ist in dieser Darstellung als ungehauster IC mit den Kontakflächen 7, 8 und in dieser Figur mit zwei Leitungen der Antennenspule 5 zwischen den Kontaktflächen 7, 8 dargestellt.

Die Kontaktflächen 7, 8 können je nach RFID-IC-Typ an unterschiedlichen Postitionen des RFID-IC angeordnet sein, und die RFID-Antenne 5 kann zwischen 1 bis 10 Windungen haben, typischerweise zwischen 3 und 5 Windungen. Grundsätzlich müssen die Windungen nicht zwischen den RFID-IC Kontaktsellen 7, 8 verlaufen, sondern sie können auch außerhalb des RFID-IC 4 angeordnet werden, wobei in diesem Fall eine Brücke über die Antennenwindungen realisiert werden muss, oder der RFID-IC wird auf einem so genannten "Interposer" abgeordnet, der als Brücke über die Antennenwindungen wirkt. Des Weiteren können die Windungen der Antennenspule 5 zwischen den RFID-IC Kontakten 7, 8 grundsätzlich auch unterhalb des RFID-IC 4 angeordnet werden.

In Fig. 2 ist der Ausschnitt im Bereich des RFID-IC 4 vergrößert schematisch dargestellt. In dieser Darstellung ist eine schematische Draufsicht auf die Innenlage des Dokuments mit den Antennenwindungen 5 und den beiden Antennenanschlussenden 5a, 5b auf den RFID-IC-Kontakten 7, 8 dargestellt. Zusätzlich ist eine erste Ausführungsvariante mit auf dem RFID-IC 4 angeordneten Sensorelementen 9 und dem Licht emittierenden Element 10 (Strahlungsquellen) sowie einem Dokumentenelement 11, dem Schichtelement 11, über den Sensorelementen 9 dargestellt. Das Schichtelement 11 kann durch ein Einbettungsmaterial gebildet sein.

Die Anordnung der Elemente 9, 10, 11 ist nur beispielhaft dargestellt. Grundsätzlich können diese Elemente mit nahezu beliebiger Größe und Form in nahezu beliebiger Position auf der Oberfläche des RFID-IC 4 angeordnet werden. Das Schichtelement 11 kann überdies, so wie schematisch dargestellt, ausschließlich im Bereich der Sensorelemente 9 angeordnet sein, und zwar den gesamten Bereich der Sensorelemente 9 überdeckend oder nur einen Teil davon oder den RFID-IC 4 bis zum Licht emittierenden Bereich 10 überdeckend oder den gesamten RFID-IC-Bereich überdeckend, oder es kann den ganzen oder einen Teilbereich des gesamten Dokuments 6 überdecken. Als Licht emittierender Bereich 10 ist in diesem Fall ein OLED-Element vorgesehen. Ein OLED-Element kann relativ einfach auf der Oberfläche eines RFID-IC 4 angeordnet und insbesondere sehr flach ausgeführt sein. Es kann zusätzlich in unterschiedlichen Formen ausgebildet sein, also länglich oder punktförmig oder mehrere unterschiedlich ansteuerbare OLED-Elemente umfassen. Des Weiteren kann die Emissionsfarbe dieses Elements unterschiedlich ausgebildet sein.

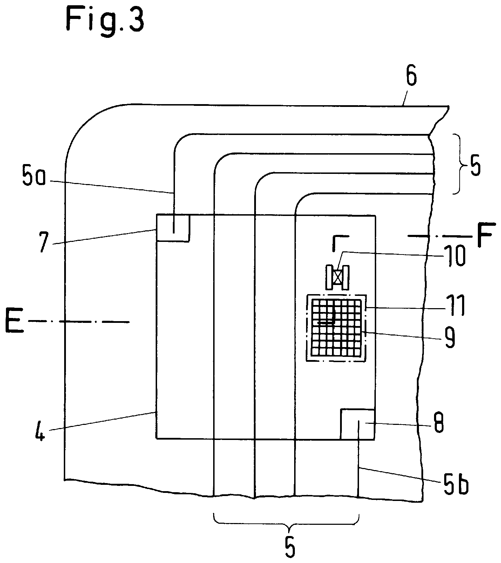

In Fig. 3 ist wie in Fig. 2 der Ausschnitt im Bereich des RFID-IC 4 in einer zweiten erfindungsgemäßen Ausführungsform schematisch vergrößert dargestellt, wobei das Licht emittierende Element 10 seitlich neben dem Licht emittierenden Element 10 und zu diesem beabstandet in Form eines LED-Elements oberflächenmontiert dargestellt ist. Die Kontaktierung eines derartigen LED-Elements 10 auf dem RFID-IC 4 kann mittels Drahtbonden oder mittels Löten oder mit leitfähigen isotropen oder anisotropen Klebern erfolgen. Des Weiteren ist in dieser Fig. 3 ein matrixartiges Sensorelement 9 dargestellt.

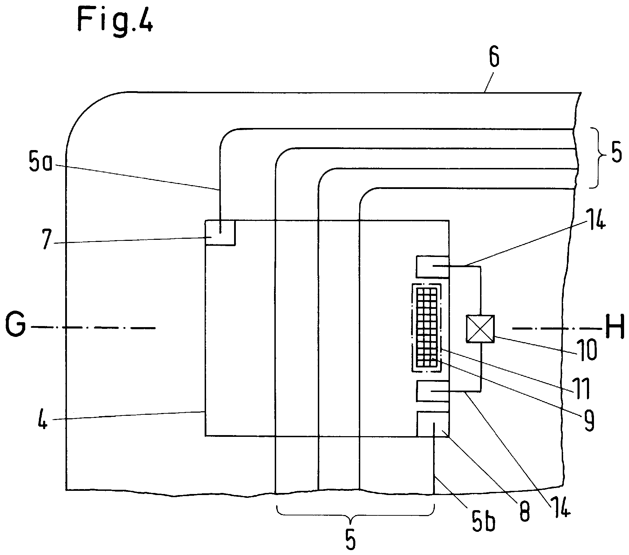

In Fig. 4 ist wie in Fig. 2 und 3 der Ausschnitt im Bereich des RFID-IC 4 in einer dritten erfindungsgemäßen Ausführungsform schematisch vergrößert dargestellt, wobei das Licht emittierende Element 10 seitlich neben dem RFID-IC 4 und zu diesem beabstandet in Form eines LED-Elements 10 über Leiterbahnen 14 mit entsprechenden Kontakten auf dem RFID-IC 4 mit diesem verbunden ist.

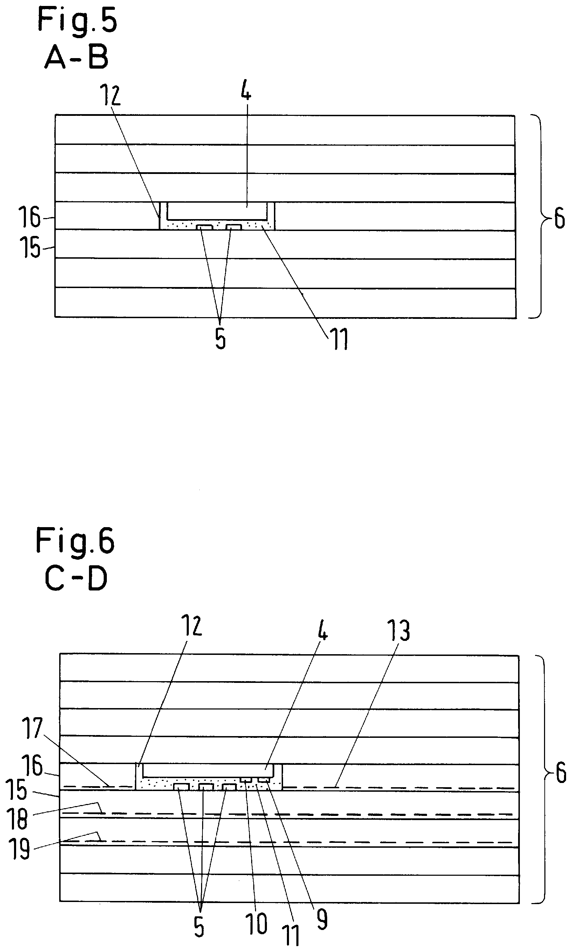

In Fig. 5 ist der Dokumentenkörper 6 in einem Schnitt A-B (Fig. 1) schematisch dargestellt. Die RFID-Antennenspule 5 ist in einer beispielhaften Ausführung auf der Innenlage 15 angeordnet, und der RFID-IC 4 ist auf diesem Substrat 15 beispielhaft mittels eines anisotropen leitfähigen Klebers 11 befestigt. Die Kontaktierung der Antennenenden 5a, 5b mit den RFID-IC-Kontaktflächen 7, 8 (Fig. 1) ist in dieser Darstellung nicht ersichtlich, jedoch einfach nachvollziehbar. Die Antennenwindungen 5 liegen unterhalb des RFID-IC 4.

In Fig. 6 ist der Dokumentenkörper 6 in einem Schnitt C-D (Fig. 2) schematisch dargestellt. In dieser Ansicht sind die Sensorelemente 9 und ein Licht emittierendes Element 10 in Form eines OLED-Elementes auf dem RFID-IC 4 angeordnet, und das Schichtelement 11 ist zumindest zwischen den Sensorelementen 9 und der Innenlage 15 angeordnet. Grundsätzlich kann jedoch das Schichtelement 11 großflächiger ausgeführt sein und derart nur das Licht emittierende Element 10 überdecken oder die gesamte Oberfläche des RFID-IC 4 oder einen Teil davon bzw. auch die gesamte Innenlagenoberfläche 15. Das Schichtelement 11 kann jedoch grundsätzlich auch aus der Innenlagen 15 gebildet werden oder aus der Schicht 17 oder aus einer Kombination dieser Materialien. Die Schicht 17 kann beispielsweise auf der Innenlage 15 mittels Drucktechniken bzw. Beschichtungstechniken beziehungsweise Extrusionstechniken ausgebildet sein und mikroskopisch kleine reflektierende oder absorbierende oder lumineszierende oder diffraktive oder holographische Strukturen enthalten. Des Weiteren können die auswertbaren Dokumentenschichten in weiteren Lagen 17, 18 des Dokuments angeordnet sein.

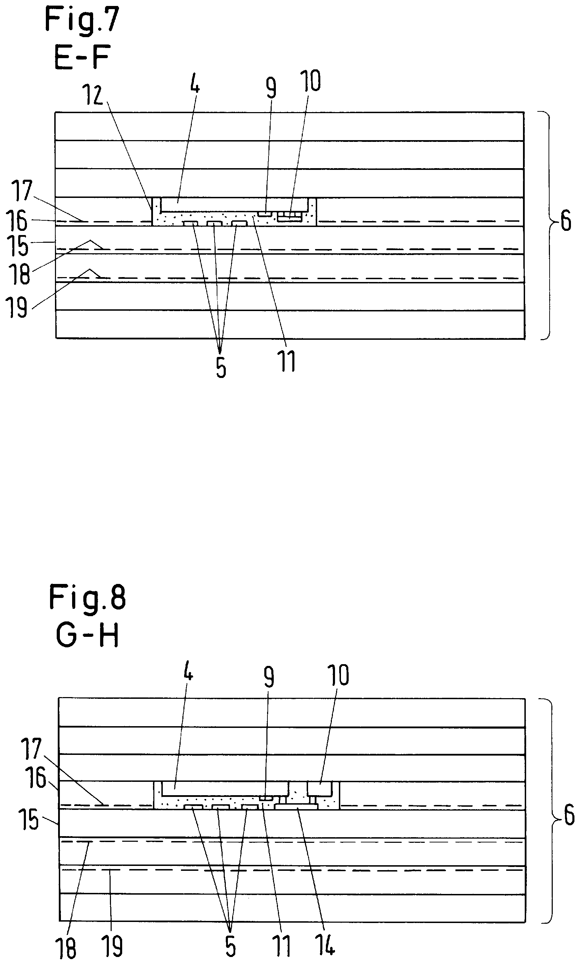

In Fig. 7 ist der Dokumentenkörper 6 in einem Schnitt E-F (Fig. 3) schematisch dargestellt. In dieser Ansicht sind die Sensorelemente 9 in Form einer Matrix in dem RFID-IC 4 integriert, und das Licht emittierende Element 10 ist in Form einer LED auf der Oberfläche des RFID-IC angeordnet und beispielsweise mittels Drahtbonden oder Flip-Chip-Technologie auf den RFID-IC 4 gelötet bzw. elektrisch leitfähig geklebt. Das Schichtelement 11 kann wie in der Beschreibung der Fig. 6 in vielfältiger Art und Weise ausgebildet werden.

In Fig. 8 ist der Dokumentenkörper in einem Schnitt G-H (Fig. 4) schematisch dargestellt. In dieser Ansicht sind die Sensorelemente 9 in Form eines Arrays in dem RFID-IC 4 integriert, und das Licht emittierende Element 10 ist in Form einer LED seitlich neben dem RFID-IC 4 und zu diesem beabstandet angeordnet und mittels Leiterbahnen 14 in ähnlicher Art und Weise wie die Antennenspule 5 mit dem RFID-IC 4 elektrisch verbunden.

Das Schichtelement 11 kann auch in diesem Falle wie in der Beschreibung der Fig. 6 ausgeführt in vielfältiger Art und Weise ausgebildet werden, wobei die seitliche Anordnung der LED 10 berücksichtigt werden muss.

Grundsätzlich kann ein Teil des Schichtelementes 11 auch in dem Schichtelement 18 oder 19 ausgebildet sein. In diesem Fall müssen die Innenlage 15 und die darunter angeordneten Innenlagen weitgehend transparent ausgebildet sein. Auf diese Weise kann der Laminatverbund des Dokuments 6 mit in die Generierung einer intrinsisch herstellbedingten Information in den Sensorelementen 9 integriert werden.

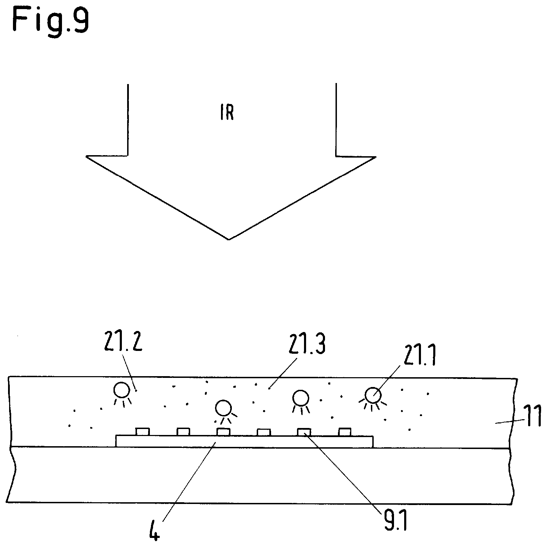

Fig. 9 zeigt einen Teilquerschnitt durch ein Dokument im Bereich eines RFID-IC 4 wie in den Fig. 5-8. Allerdings ist in diesem Falle lediglich ein Träger für den RFID-IC 4 sowie ein Schichtelement 11 über dem RFID-IC 4 gezeigt. Weitere Schichten, die zusammen ein Dokument bilden, können vorhanden sein. Der RFID-IC 4 weist in diesem Falle Sensorelemente 9.1 auf, mit denen Licht empfangen werden kann. In dem Schichtelement 11 befinden sich beispielsweise in Form von Partikeln und gegebenenfalls auch teilweise in dem Material des Schichtelements 11 gelöst diverse Stoffe 21.1, 21.2, 21.3, die mit elektromagnetischer Strahlung, die von oben in das Kartenmaterial eingestrahlt wird, in Wechselwirkung treten. Die elektromagnetische Strahlung ist in diesem Falle Infrarot-Strahlung. Zum einen befinden sich Upconversion-Stoffe 21.1 in dem Schichtelement 11, die die Infrarotstrahlung in sichtbare Strahlung umwandelt. Die sichtbare Strahlung wird zum einen teilweise an Stoffen gelöscht, die Quenching-Stoffe 21.2. Weiterhin befinden sich Streustoffe 21.3 in dem Schichtelement 11, an denen die in dem Element befindliche Lichtstrahlung gestreut wird.

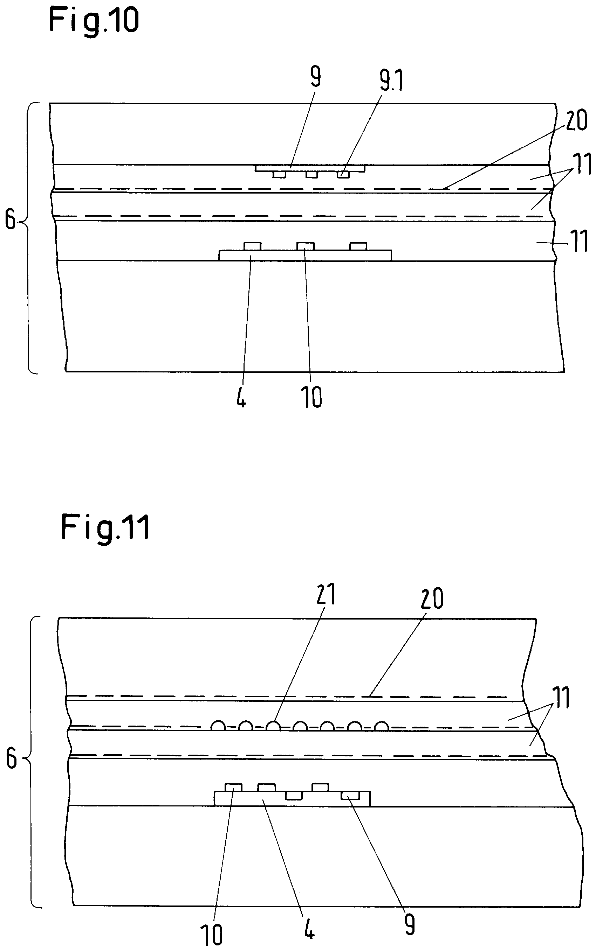

In Fig. 10 ist ebenfalls ein erfindungsgemäßes Dokument im Bereich des RFID-IC 4 in einer Schnittdarstellung gezeigt. In diesem Falle befinden sich auf dem RFID-IC 4 Licht emittierende Elemente 10 (Strahlungsquellen). An einer weiteren Schicht im Dokument ist ein Sensor mit mehreren Sensorelementen 9 angeordnet und zwar dem RFID-IC 4 mit den Licht emittierenden Elementen 10 gegenüber liegend. Licht wird in diesem Falle von den Licht emittierenden Elementen 10 zu den Sensorelementen 9, 9.1 gelangen, wobei es die Schichtelemente 11 durchquert und dabei beeinflusst wird, sodass sich ein Verifikationssignal an den Sensorelementen 9, 9.1 zeigt. In den Schichtelementen 11 sind ferner beispielsweise drucktechnisch erzeugte Streuzentren 20 gebildet, die das Verifikationssignal weiter beeinflussen.

Fig. 11 ist ein weiteres erfindungsgemäßes Dokument im Bereich des RFID-IC 4 in einer Querschnittsdarstellung gezeigt. In diesem Falle befinden sich auf dem RFID-IC 4 sowohl Licht emittierende Elemente 10 (Strahlungsquellen) als auch Sensorelemente 9. Ferner befinden sich Schichtelemente 11, die oberhalb des RFID-IC 4 angeordnet sind und an den RFID-IC 4 direkt angrenzen und die zusätzlich photochrome Stoffe 21 enthalten, d.h. Stoffe, die das emittierte Licht beeinflussen, nämlich lumineszieren. Ferner befinden sich in den Schichtelementen 11 beispielsweise drucktechnisch erzeugte Reflexionszentren 20, die das von den Strahlungsquellen 10 emittierte Licht zu den Sensorelementen 9 zumindest teilweise zurückwerfen.

## Patentansprüche

1. Sicherheits- oder Wertdokument (1), enthaltend mindestens einen zu einem Dokumentenelement (11) des Sicherheits- oder Wertdokuments (1) benachbarten ungehausten integrierten elektronischen Schaltkreis (4) zur Speicherung von schutzbedürftigen Daten, mit zumindest einer Kommunikationsschnittstelle (3), wobei das Sicherheits- oder Wertdokument dazu eingerichtet ist, um eine Verifikation im Dokument selbst durchzuführen und wobei eine zusätzliche, einzigartige, nicht kopierbare, zufällige Information für die Ausführung eines kryptographischen Protokolls gelesen und verifiziert werden muss, damit die schutzbedürftigen Daten aus dem integrierten elektronischen Schaltkreis ausgelesen werden können, wobei das Sicherheits- oder Wertdokument (1) hierzu zusätzlich mindestens ein Sensorelement (9) zum Empfang eines Verifikationssignals aufweist und wobei das Verifikationssignal durch physikalische Eigenschaften des zum integrierten elektronischen Schaltkreis (4) benachbarten Dokumentenelements (11) beeinflusst wird, sodass eine Manipulation des Wert- oder Sicherheitsdokuments über das durch die veränderten physikalischen Eigenschaften beeinflusste Verifikationssignal erkennbar ist, wobei ferner mindestens ein Sensorelement (9) ein auf elektromagnetische Strahlung ansprechendes, lichtempfindliches Sensorelement ist und das Verifikationssignal durch elektromagnetische Strahlung gebildet wird, wobei zusätzlich mindestens eine als Lichtquelle ausgebildete Anregungsquelle (10) zur Erzeugung von elektromagnetischer Strahlung in dem Dokument vorhanden ist,
wobei
die mindestens eine Anregungsquelle (10) elektromagnetische Strahlung mit einer vorgegebenen Pulsfolge erzeugt, wobei mindestens eine Strahlungsquelle durch sich im Dokumentenelement (11) befindende lumineszierende Stoffe (21, 21.1) gebildet wird, die durch die mindestens eine Anregungsquelle (10), die innerhalb des Sicherheits- oder Wertdokument (1) ausgebildet ist, anregbar sind, sodass die erzeugte elektromagnetische Strahlung nach Beeinflussung durch das Dokumentenelement (11) das Verifikationssignal ergibt,
wobei das Dokumentenelement ein Schichtelement (11) ist, das von der elektromagnetischen Strahlung auf einem Strahlungsweg zu dem mindestens einen Sensorelement (9) zumindest teilweise durchquert wird und in dem die elektromagnetische Strahlung zeitlich moduliert wird, und wobei das Schichtelement aus einer polymeren weitgehend transparenten Matrix oder aus einer Haftvermittlerschicht besteht, in die homogen dispergiert Lumineszenz bzw. Phosphoreszenz-Pigmente eingebaut sind, wobei der integrierte elektronische Schaltkreis dazu eingerichtet ist, das Verifikationssignal gegen ein Referenz-Verifikationssignal, welches auf die gleiche Art wie das Verifikationssignal erzeugt und auf dem Schaltkreis abgelegt ist, zu verifizieren, nämlich ob der integrierte elektronische Schaltkreis nach einer Einbettung in das Sicherheits- oder Wertdokument manipuliert worden ist.

2. Sicherheits- oder Wertdokument (1) nach einem der vorstehenden Ansprüche, **dadurch gekennzeichnet, dass** mindestens ein Sensorelement (9) Teil des integrierten elektronischen Schaltkreises (4) ist.

3. Sicherheits- oder Wertdokument (1) nach einem der vorstehenden Ansprüche, **dadurch gekennzeichnet, dass** die mindestens eine Anregungsquelle (10) eine einzelne LED oder OLED direkt am integrierten elektronischen Schaltkreis ist.

4. Sicherheits- oder Wertdokument (1) nach Anspruch 1 oder 2, **dadurch gekennzeichnet, dass** die mindestens eine Anregungsquelle (10) in Form einer LED oder einer OLED, die seitlich beabstandet zu dem integrierten elektronischen Schaltkreis (4) angeordnet ist und elektrisch leitend an dem integrierten elektronischen Schaltkreis (4) kontaktiert.

5. Sicherheits- oder Wertdokument (1) nach einem der vorangehenden Ansprüche, **dadurch gekennzeichnet, dass** die physikalischen Eigenschaften des Schichtelements (11) durch eine zufällige Verteilung von in mindestens einem Schichtelement (11) enthaltenen Partikeln (20, 21, 21.1, 21.2, 21.3) definiert werden.

6. Sicherheits- oder Wertdokument (1) nach einem der vorangehenden Ansprüche, **dadurch gekennzeichnet, dass** mindestens ein Schichtelement (11) unmittelbar angrenzend an die mindestens eine Anregungsquelle (10) in dem Dokument (1) angeordnet ist und dass sich auf der der mindestens einen Anregungsquelle (10) abgewandten Seite des mindestens einen Schichtelements (11) eine mindestens einen reflektierenden Bereich aufweisende Reflexionsschicht (20) befindet.

7. Sicherheits- oder Wertdokument (1) nach einem der Ansprüche 2 bis 6, **dadurch gekennzeichnet, dass** der integrierte elektronische Schaltkreis (4) zur Ausführung eines kryptographischen Protokolls ausgebildet ist und die für die Ausführung des kryptographischen Protokolls notwendigen Werte aus dem Referenz-Verifikationssignal abgeleitet sind.

8. Sicherheits- oder Wertdokument (1) nach Anspruch 7, **dadurch gekennzeichnet, dass** der integrierte elektronische Schaltkreis (4) zur Errechnung eines Schlüssels, basierend auf den Werten aus dem Referenz-Verifikationssignal, oder zur Errechnung eines HASH-Wertes aus dem Verifikationssignal ausgebildet ist.

9. Sicherheits- oder Wertdokument (1) nach einem der Ansprüche 7 und 8, **dadurch gekennzeichnet, dass** der integrierte elektronische Schaltkreis (4) über das kryptographische Protokoll verifiziert, ob das Sicherheits- oder Wertdokument (1) unmanipuliert ist und nur in diesem Falle das Auslesen der schutzbedürftigen Daten freigibt.

10. Verfahren zur Herstellung des Sicherheits- oder Wertdokuments (1) nach einem der Ansprüche 1 bis 9, umfassend folgende Verfahrensschritte:
(a) Aufbringen des integrierten elektronischen Schaltkreises (4) auf eine erste Lage eines ersten Dokumentenelements,
(b) Aufbringen einer zweiten Lage eines zweiten Dokumentenelements auf die den integrierten elektronischen Schaltkreis (4) aufweisende Seite der ersten Lage und
(c) Laminieren der ersten und der zweiten Lage.

11. Verfahren zum Verifizieren des Sicherheits- oder Wertdokuments (1) nach einem der Ansprüche 1 bis 9, umfassend folgende Verfahrensschritte:
(a) Erzeugen des Verifikationssignals in dem Sicherheits- und Wertdokument und Empfangen des Verifikationssignals mittels des mindestens eine Sensorelements (9) und
(b) Vergleichen des empfangenen Verifikationssignals mit einem in dem integrierten elektronischen Schaltkreis (4) gespeicherten Referenz-Verifikationssignal, das unmittelbar nach dem Einbetten des integrierten elektronischen Schaltkreises (4) in das Sicherheits- oder Wertdokument (1) erhalten worden ist.

12. Verfahren nach Anspruch 11, **dadurch gekennzeichnet, dass** das Referenz-Verifikationssignal zur Generierung eines Schlüssels für die Ausführung eines kryptographischen Protokolls verwendet wird.

13. Verfahren nach einem der Ansprüche 11 und 12, **dadurch gekennzeichnet, dass** das Verifikationssignal und das Referenz-Verifikationssignal unter Verwendung eines kryptographischen Protokolls codiert werden.

14. Verfahren nach einem der Ansprüche 11 bis 13, **dadurch gekennzeichnet, dass** das Verifikationssignal und das Referenz-Verifikationssignal unter Bildung von entsprechenden HASH-Werten codiert werden.

## Claims

1. A security or valuable document (1), containing at least one unhoused integrated electronic circuit (4) which adjoins a document element (11) of the security or valuable document (1) for storing data requiring protection, with at least one communication interface (3), wherein the security or valuable document is set up to perform a verification in the document itself and additional, unique, non-copyable, random information for the execution of a cryptographic protocol must be read and verified in order for the data requiring protection to be read from the integrated electronic circuit, wherein the security or valuable document (1) additionally comprises for this purpose at least one sensor element (9) for receiving a verification signal, and the verification signal is influenced by physical properties of the document element (11) adjoining the integrated electronic circuit (4), so that a manipulation of the valuable or security document can be identified by means of the verification signal that is influenced by the altered physical properties, wherein at least one sensor element (9) is also a light-sensitive sensor element that is responsive to electromagnetic radiation, and the verification signal is formed by electromagnetic radiation, wherein at least one excitation source (10) that is embodied as a light source for generating electromagnetic radiation is also present in the document,
wherein the at least one excitation source (10) generates electromagnetic radiation with a predetermined pulse sequence, with at least one radiation source being formed by luminescent substances (21, 21.1) that are located in the document element (11) and that can be excited by the at least one excitation source (10) that is embodied within the security or valuable document (1), so that the generated electromagnetic radiation results in the verification signal after being influenced by the document element (11),
wherein the document element is a layer element (11) which is at least partially traversed by the electromagnetic radiation on a radiation path to the at least one sensor element (9) and in which the electromagnetic radiation is temporally modulated, and wherein the layer element consists of a polymeric, largely transparent matrix or of an adhesion promoter layer in which luminescent or phosphorescent pigments are incorporated in a homogeneously dispersed manner, the integrated electronic circuit being set up to check the verification signal against a reference verification signal that is generated in the same way as the verification signal and stored on the circuit, particularly in order to verify whether the integrated electronic circuit has been manipulated after being embedded in the security or valuable document.

2. The security or valuable document (1) as set forth in one of the preceding claims, **characterized in that** at least one sensor element (9) is part of the integrated electronic circuit (4).

3. The security or valuable document (1) as set forth in one of the preceding claims, **characterized in that** the at least one excitation source (10) is a single LED or OLED that is directly at the integrated electronic circuit.

4. The security or valuable document (1) as set forth in claim 1 or 2, **characterized in that** the at least one excitation source (10) is provided in the form of an LED or an OLED that is laterally spaced apart from the integrated electronic circuit (4) and is contacted in an electrically conductive manner on the integrated electronic circuit (4).

5. The security or valuable document (1) as set forth in one of the preceding claims, **characterized in that** the physical properties of the layer element (11) are defined through a random distribution of particles (20, 21, 21.1, 21.2, 21.3) contained in at least one layer element (11).

6. The security or valuable document (1) as set forth in one of the preceding claims, **characterized in that** at least one layer element (11) is arranged directly adjacent to the at least one excitation source (10) in the document (1) and that a reflective layer (20) having at least one reflective region is located on the side of the at least one layer element (11) facing away from the at least one excitation source (10).

7. The security or valuable document (1) as set forth in one of claims 2 to 6, **characterized in that** the integrated electronic circuit (4) is designed to execute a cryptographic protocol, and the values required for executing the cryptographic protocol are derived from the reference verification signal.

8. The security or valuable document (1) as set forth in claim 7, **characterized in that** the integrated electronic circuit (4) is designed to calculate a key based on the values from the reference verification signal, or to calculate a HASH value from the verification signal.

9. The security or valuable document (1) as set forth in one of claims 7 and 8, **characterized in that**, using the cryptographic protocol, the integrated electronic circuit (4) verifies whether the security or valuable document (1) is unmanipulated and permits the data requiring protection to be read only **in that** case.

10. A method for manufacturing the security or valuable document (1) as set forth in one of claims 1 to 9, comprising the following method steps:
(a) applying the integrated electronic circuit (4) to a first layer of a first document element,
(b) applying a second layer of a second document element to the side of the first layer having the integrated electronic circuit (4), and
(c) laminating the first and the second layer.

11. A method for verifying the security or valuable document (1) as set forth in one of claims 1 to 9, comprising the following method steps:
(a) generating the verification signal in the security and valuable document and receiving the verification signal by means of the at least one sensor element (9), and
(b) comparing the received verification signal with a reference verification signal stored in the integrated electronic circuit (4) that was received immediately after the embedding of the integrated electronic circuit (4) in the security or valuable document (1).

12. The method as set forth in claim 11, **characterized in that** the reference verification signal is used to generate a key for the execution of a cryptographic protocol.

13. The method as set forth in one of claims 11 and 12, **characterized in that** the verification signal and the reference verification signal are encoded using a cryptographic protocol.

14. The method as set forth in one of claims 11 to 13, **characterized in that** the verification signal and the reference verification signal are encoded under formation of corresponding HASH values.

## Revendications

1. Document de sécurité ou de valeur (1), contenant au moins un circuit électronique intégré (4) dépourvu de boîtier, adjacent à un élément (11) du document de sécurité ou de valeur (1) et destiné à stocker des données à protéger, et comprenant au moins une interface de communication (3), le document de sécurité ou de valeur étant conçu pour effectuer une vérification dans le document lui-même et une information supplémentaire, unique, non copiable, aléatoire, destinée à l'exécution d'un protocole cryptographique devant être lue et vérifiée pour que les données à protéger puissent être lues à partir du circuit électronique intégré, le document de sécurité ou de valeur (1) comportant pour cela en plus au moins un élément capteur (9) destiné à recevoir un signal de vérification et le signal de vérification étant influencé par les propriétés physiques de l'élément de document (11) adjacent au circuit électronique intégré (4) de sorte qu'une manipulation du document de sécurité ou de valeur puisse être identifiée par le biais du signal de vérification influencé par les propriétés physiques modifiées, en outre au moins un élément capteur (9) étant un élément capteur photosensible sensible au rayonnement électromagnétique et le signal de vérification étant formé par un rayonnement électromagnétique, de plus au moins une source d'excitation (10) conçue comme une source lumineuse étant présente pour générer un rayonnement électromagnétique dans le document,
l'au moins une source d'excitation (10) générant un rayonnement électromagnétique avec une séquence d'impulsions prédéterminée, au moins une source de rayonnement étant formée par des substances luminescentes (21, 21.1) qui sont situées dans l'élément de document (11) et qui peuvent être excitées par l'au moins une source d'excitation (10) formée à l'intérieur du document de sécurité ou de valeur (1), de sorte que, après été avoir influencé par l'élément de document (11), le rayonnement électromagnétique généré délivre le signal de vérification,
l'élément de document étant un élément de couche (11) qui est au moins partiellement traversé par le rayonnement électromagnétique sur un trajet de rayonnement menant à au moins un élément capteur (9) et dans lequel le rayonnement électromagnétique est modulé dans le temps, et l'élément de couche comprenant une matrice polymère dans une large mesure transparente ou une couche de promoteur d'adhérence dans laquelle des pigments de luminescence ou de phosphorescence sont incorporés en étant dispersés de manière homogène, le circuit électronique intégré étant conçu pour vérifier le signal de vérification par rapport à un signal de vérification de référence, qui est généré de la même manière que le signal de vérification et qui est stocké dans le circuit, afin de savoir si le circuit électronique intégré après intégration dans le document de sécurité ou de valeur a été manipulé.

2. Document de sécurité ou de valeur (1) selon l'une des revendications précédentes, **caractérisé en ce qu'**au moins un élément capteur (9) fait partie du circuit électronique intégré (4).

3. Document de sécurité ou de valeur (1) selon l'une des revendications précédentes, **caractérisé en ce que** l'au moins une source d'excitation (10) est une LED ou OLED distincte placée directement sur le circuit électronique intégré.

4. Document de sécurité ou de valeur (1) selon la revendication 1 ou 2, **caractérisé en ce que** l'au moins une source d'excitation (10) se présente sous la forme d'une LED ou d'une OLED, qui est disposée latéralement à distance du circuit électronique intégré (4) et qui est en contact électriquement conducteur avec le circuit électronique intégré (4).

5. Document de sécurité ou de valeur (1) selon l'une des revendications précédentes, **caractérisé en ce que** les propriétés physiques de l'élément de couche (11) sont définies par une répartition aléatoire de particules (20, 21, 21.1, 21.2, 21.3) contenues dans un élément de couche (11) .

6. Document de sécurité ou de valeur (1) selon l'une des revendications précédentes, **caractérisé en ce qu'**au moins un élément de couche (11) est disposé de manière directement adjacente à l'au moins une source d'excitation (10) dans le document (1) et **en ce que** l'au moins un côté de l'au moins un élément de couche (11) qui est opposé à une source d'excitation (10) est une couche réfléchissante (20) comportant au moins une zone réfléchissante.

7. Document de sécurité ou de valeur (1) selon l'une des revendications 2 à 6, **caractérisé en ce que** le circuit électronique intégré (4) est conçu pour exécuter un protocole cryptographique et les valeurs nécessaires à l'exécution d'un protocole cryptographique sont dérivées du signal de vérification de référence.

8. Document de sécurité ou de valeur (1) selon la revendication 7, **caractérisé en ce que** le circuit électronique intégré (4) est conçu pour calculer une clé sur la base des valeurs obtenues du signal de vérification de référence, ou pour calculer une valeur HASH obtenue du signal de vérification.

9. Document de sécurité ou de valeur (1) selon l'une des revendications 7 et 8, **caractérisé en ce que** le circuit électronique intégré (4) vérifie par le biais du protocole cryptographique si le document de sécurité ou de valeur (1) n'a pas été manipulé et permet, uniquement dans ce cas, la lecture des données à protéger.

10. Procédé de fabrication du document de valeur ou de valeur (1) selon l'une des revendications 1 à 9, ledit procédé comprenant les étapes suivantes :
(a) appliquer le circuit électronique intégré (4) sur une première couche d'un premier élément de document,
(b) appliquer une deuxième couche d'un deuxième élément de document sur le côté de la première couche qui comporte le circuit électronique intégré (4) et
(c) stratifier les première et deuxième couches.

11. Procédé de vérification du document de sécurité ou de valeur (1) selon l'une des revendications 1 à 9, ledit procédé comprenant les étapes suivantes :
(a) générer le signal de vérification dans le document de sécurité et de valeur et recevoir le signal de vérification au moyen de l'au moins un élément capteur (9) et
(b) comparer le signal de vérification reçu à un signal de vérification de référence qui a été mémorisé dans le circuit électronique intégré (4) et qui a été reçu immédiatement après l'intégration du circuit électronique intégré (4) dans le document de sécurité ou de valeur (1).

12. Procédé selon la revendication 11, **caractérisé en ce que** le signal de vérification de référence est utilisé pour générer une clé destinée à l'exécution d'un protocole cryptographique.

13. Procédé selon l'une des revendications 11 et 12, **caractérisé en ce que** le signal de vérification et le signal de vérification de référence sont codés à l'aide d'un protocole cryptographique.

14. Procédé selon l'une des revendications 11 à 13, **caractérisé en ce que** le signal de vérification et le signal de vérification de référence sont codés avec formation de valeurs HASH correspondantes.
